# EUROPEAN PATENT SPECIFICATION

(11) **EP 3 307 617 B1**
(45) Date of publication and mention of the grant of the patent: **05.01.2022**
(21) Application number: 15894853.9
(22) Date of filing: 12.06.2015
(51) Int. Cl.: B63H 5/125, B63H 25/42, G05D 1/02, G01L 5/12

(54) **VESSEL CONTROL**
SCHIFFSTEUERUNG
COMMANDE DE NAVIRE

(43) Date of publication of application: 18.04.2018
(73) Proprietor: ABB Oy, 00380 Helsinki (FI)
(72) Inventor: TOIVA, Jari, 00980 Helsinki (FI)
(74) Representative: Kolster Oy Ab
(86) International application number: PCT/FI2015/050425
(87) International publication number: WO 2016/198731

(56) References cited:
- EP-A1- 1 806 278
- EP-A1- 2 317 295
- WO-A1-92/06890
- WO-A1-2013/139609
- FI-B- 107 042
- JP-A- S5 833 141
- US-A- 4 611 549
- US-A- 4 861 292
- US-A- 5 352 137
- US-A1- 2007 068 438
- None

## Description

### FIELD

The present invention relates to operation control of a marine vessel.

### BACKGROUND

Provision of propulsion power and steering of a marine vessel is typically carried out either by an azimuthing propulsion unit or a combination of a rudder and a mechanical thruster.

In the case of azimuthing propulsion units, typically two propulsion units are arranged side by side at the stern of the ship. Each of the azimuthing propulsion units can be controlled independently of the other propulsion unit by controlling the propulsion power and/or the steering angle of the unit.

US2007/0068438 discloses a small boat comprising a plurality of propulsion units mounted to a transom of the boat. There is a control unit that adjusts the output, a trim angle or a height of a propeller of the propulsion units in accordance with steering angle and a running condition of the boat to control a total thrust and running direction of the propulsion units.

EP1806278 discloses a method determining thrust exerted on water vehicle by a boat drive, and controlling and/or regulating the drive depending on the determined thrust. A speed of the water vehicle is determined by a satellite navigation system, and a power transmitted by the drive to the water vehicle is determined from the thrust force and the speed.

US5352137 discloses an automatic position control for marine propulsion device wherein the lift condition of the propulsion device is adjusted in response to a sensed running condition of the watercraft such as changes in acceleration, speed or planing condition.

Current solutions for controlling the propulsion units are insufficient in view of efficiency, for example.

### SUMMARY

An object of the present invention is to provide an apparatus so as to alleviate the above disadvantages. The object of the invention is achieved with a control arrangement which is defined in the independent claim. Some embodiments are disclosed in the dependent claims.

### DRAWINGS

In the following, the invention will be described in greater detail by means of some embodiments with reference to the accompanying drawings, in which
Figure 1 shows an embodiment of an azimuthing propulsion unit;
Figure 2 shows an embodiment of a vessel provided with a control arrangement; and
Figure 3 shows an embodiment of a method.

### DETAILED DESCRIPTION

In the following, the invention will be described with reference to some embodiments. The embodiments relate to operation control of a vessel/ship. There is provided a control arrangement, which has two or more propulsion units and a control system for controlling the propulsion units.

One type of a rotatable propulsion unit is an azimuthing propulsion unit, which can be rotated full 360 degrees. According to the invention, the vessel is provided with two or more azimuthing propulsion units.

Typically azimuthing propulsion units are arranged below the ship hull at the stern of the ship. In the case of two propulsion units, they may be positioned adjacent to each other such that one is on the port side and one on the starboard side of the vessel hull. Often the azimuthing propulsion unit may be operated both in pulling and pushing operation modes. Typically one of the operation modes is the principal operation mode to be used in open water, the other being applied temporarily in ports, for instance.

In an embodiment, the propulsion power for an azimuthing propulsion unit is provided by an electric motor arranged into an underwater pod unit exterior to the vessel hull. In another embodiment the propulsion power is provided by an engine (diesel or electric) arranged within the vessel hull, wherefrom the power is delivered by gears to a propeller shaft of the propulsion unit.

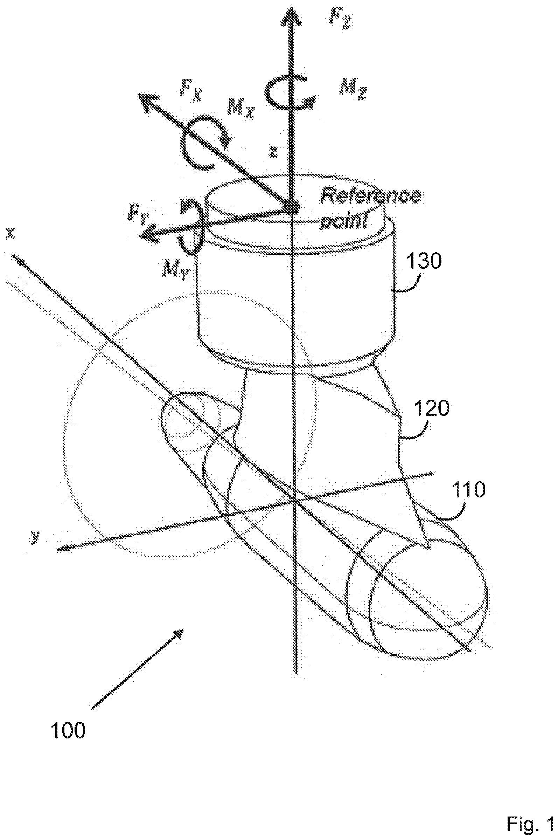

Figure 1 shows one embodiment of an azimuthing propulsion unit 100. The main parts of the propulsion unit include a pod 110, a strut 120 to which the pod 110 is attached to, and the rotating member 130. By means of the rotating member 130 such as steering bearing or rim the propulsion unit 100 is fixed rotatably to the vessel. The pod 110 and the strut 120 are located in the water under the ship hull, whereas the rotating member 130 and the steering unit controlling the rotation of the rotation member 130 reside at least mainly within the ship hull.

In the embodiment of Figure 1, the azimuthing propulsion unit comprises a shuttle-formed pod portion 110 housing an electric motor. The shaft of the motor is fixed to a propeller, which is fixed either the fore of aft of the pod.

In the embodiments, the control system is provided with at least one measuring device for measuring a load parameter affected by the propulsion unit on the vessel during a course of the vessel. The load parameter may refer here to a strain measured from the strut, for instance. The load parameter may alternatively refer to a displacement value. In an embodiment, inclination/tilting of a steering bearing may be measured.

Based on the above mentioned measured load parameter value, the load, such as force or bending moment, caused by the propulsion unit on the vessel can be determined. In this determination various factors can be taken into account, such as the positions of the one or more measuring devices. The determination/calculation of the load may be performed by means of a predetermined mathematical model.

In the following, the measuring device that measures a load parameter (strain, displacement) from which the load can be determined, is called as load or force measuring device. However, it is understood that even though the measured parameter is indicative of the load, further processing of the value may be required to obtain a load value and/or a thrust estimate.

The load/force measuring device may be a strain gauge. An advantage associated with the strain gauge is that it is easy to assemble. The assembly can be carried out by gluing or by bolting, for instance. The strain gauge may be placed to the side walls of the strut, either inside or outside of the strut, or the strain gauge may be placed to the vessel hull to measure loads which the propulsion unit is affecting to the vessel

In another embodiment, the load measuring device may be a displacement measuring device, which is arranged to measure inclination/tilting of the steering bearing during operation of the ship.

In still another embodiment, the load measuring device may be an optical measuring device, such as a camera or a laser measuring arrangement for measuring the load of the propulsion unit 100. The optical measuring device may be arranged to the pod unit directed upwards for observing the bending or displacement of the strut and/or steering bearing. Alternatively, the optical measuring device may be placed to the steering bearing for observing displacement of the pod unit.

In the following, the embodiments are explained mainly by referring to strain gauges places to various places in/on the strut or within the vessel hull, but as referred above the load parameter measuring device is not limited to being a strain gauge.

In an embodiment, the load parameter measuring device is located in the strut 120 in the proximity of the steering bearing 130 because at that point the measurement best illustrates the stress experienced by the propulsion unit.

In an embodiment, the force parameter measuring device(s) may be placed interior of the strut. This makes it possible to apply wired or wireless transmission of the measurement results to a control unit that controls the operation of the propulsion unit.

In an embodiment, there may be a strain gauge in a side wall of the strut. The side wall refers here to a wall that is defined in the xz-space in Figure 1. That is, the side wall refers to a wall that faces to at least substantially perpendicular direction when compared to the longitudinal direction of the pod 100 or the shaft of the propeller.

A strain gauge is a typically a longitudinal device where the longitudinal strain can be measured. In an embodiment, the strain gauge is a so called shear strain gauge. In Figure 1, the longitudinal strain gauge may be arranged vertically parallel to the z-axis. In an embodiment, there may be arranged two strain gauges on both opposing sides of the strut for measuring the strain of the strut. In this way it can be observed which way the pod twists along the y-axis.

Instead of, or in addition to having the force measuring device(s) on the side wall of the strut, the force measuring devices may also be arranged on one or both end walls of the strut. That is, the measuring devices are displaced from each other along the x-axis. Also in such an embodiment, the strain gauge may be arranged at least substantially vertically.

Instead of placing the force measuring device such as strain gauge to the propulsion unit, the device may be placed to the vessel hull to measure strain caused by the propulsion unit on the vessel hull. The forces affecting the propulsion unit cause opposite forces on the principally rigid vessel hull, which forces and their effects on the vessel hull can be monitored and measured.

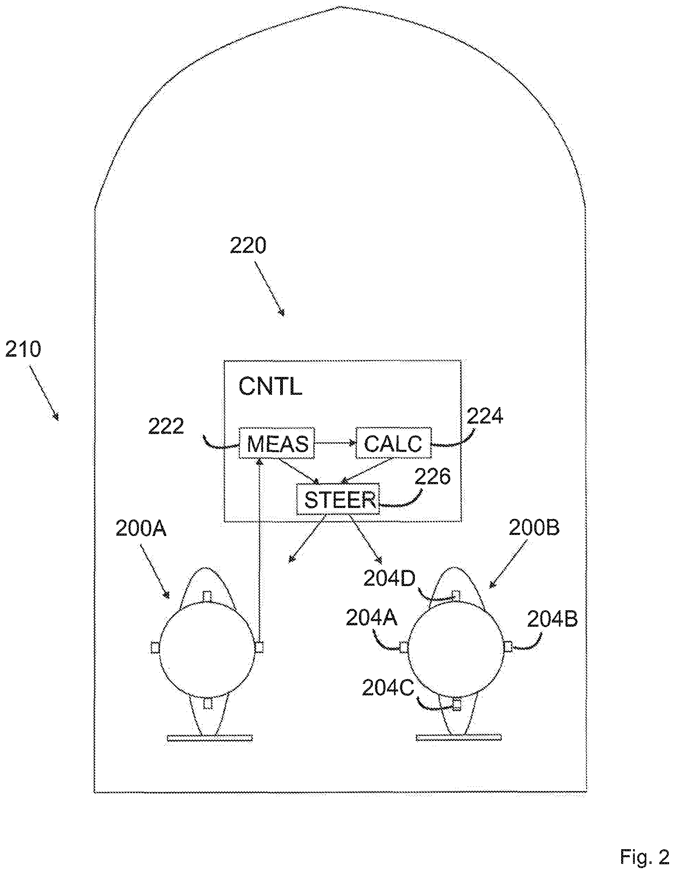

Figure 2 shows schematically one embodiment of the whole propulsion and control system. In the embodiment there is shown a vessel 210 having two azimuthing propulsion units 200A, 200B placed side by side at the stern of the vessel.

There is shown that each azimuthing propulsion unit 200A, 200B is provided with four load parameter measurement devices. The strain gauges of the propulsion unit 200B have been marked with references 204A to 204D. In alternative embodiments, the load measuring device may be a displacement sensor arranged to a steering bearing and/or a camera or video camera arranged interior of the pod or the strut.

The strain gauges may thus be placed to the top part of the strut in the proximity of the swivel/rim. In the propulsion unit 200B on the right, there is a pair of measurement devices 204A and 204B on the right and on the left. These measure the sideways force affecting the propulsion unit. Furthermore, there may be a pair of measurement devices in the front (204D) and in the rear (204C) of the propulsion unit. These are arranged to measure the longitudinal twist of the propulsion unit, and are representative of the thrust force provided by the propulsion unit. By way of an example, when the propeller placed at the stern of the propulsion unit provides a high level of thrust, the lower part of the strut is pushed forward toward the head of the vessel. This causes the measurement device 204C at the stern side of the propulsion unit to show a high value, such as high strain. The same could be observed by a displacement sensor in the steering bearing or by an optical measurement device in the pod/strut.

Figure 2 shows also a control system 220 of the vessel 210 for controlling the operation of the propulsion units 200A, 200B. All the measuring devices for measuring the load parameters belong to the control system.

In the shown embodiment, the control system has a receiving device 222 for receiving measurement information from the measurement devices 204A to 204D during the operation of the ship/vessel. In an embodiment it is arranged that the operation parameters of the propulsion units are tested with several different operation parameter values and the measurement data from the load parameter measurement devices is collected during this procedure. In an embodiment, the operation parameter is the steering angle of the propulsion unit. Alternatively, the operation parameter is the toe angle of the two propulsion units, that is, the difference between steering angles of the two propulsion unit. The operation parameter may also be the propulsion power/efficiency of the propulsion unit.

The control system may have a calculation unit 224, which performs predetermined calculation based on the measured data. In an embodiment, the calculation unit 224 attempts to maximize the thrust provided by the propulsion unit(s). As an output, the calculation may provide steering angles for both propulsion units such that the thrust to the propagation direction of the vessel is maximized.

In more sophisticated models, there may be provided a function, which may be called a cost function having several parameters. In addition to maximizing thrust, the model may have one or more other measureable or determinable parameters, such as time, and fuel consumption, for instance.

As shown, the calculation unit is connected to a steering unit 226, which controls the operation parameters, such as orientation and/or propulsion power of the propulsion units.

In the embodiments, the measuring of the load parameters, and estimating the load from the measured parameters, and adjusting the operating parameters are performed continuously. Thereby it is ensured that the operation of the vessel is optimized and the thrust is maximized at all times, whereby the energy consumption is also minimized.

The units of the control system 220 may be implemented by software or hardware or combination thereof.

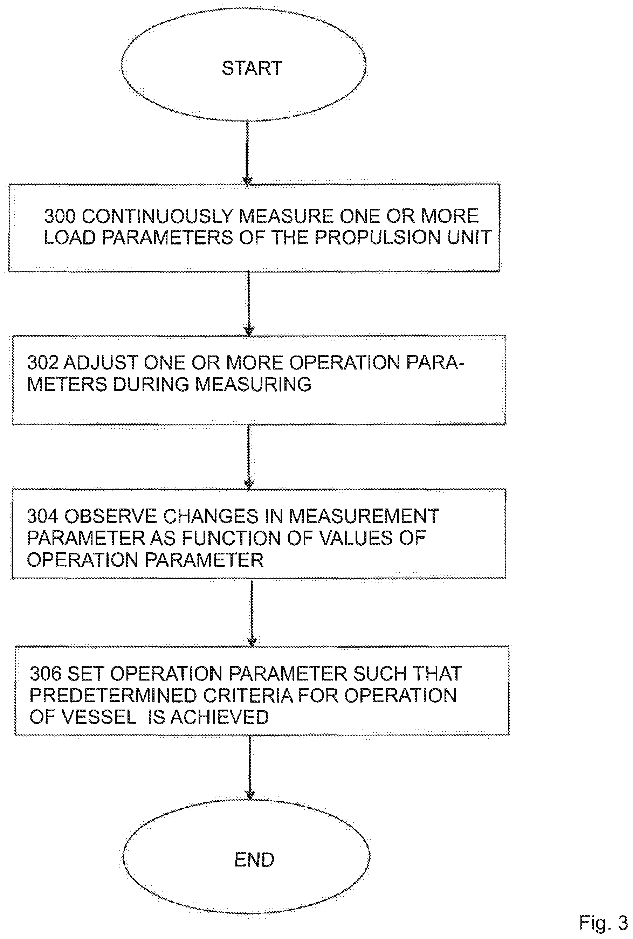

Figure 3 shows an embodiment of a method. The method may be applied to a vessel having one or more fixed and/or one or more rotatable propulsion units. The rotatable propulsion unit may be azimuthing propulsion unit operated by an electric motor or diesel engine.

There is arranged one or more load parameter measuring devices to the propulsion unit or to the vessel hull. In an embodiment, the load measuring device is a strain gauge for measuring strain or bending moment caused by the water on the propulsion unit during operation. Each of the strain gauges may be arranged parallel to the x-, y-, and z-axes shown in Figure 1. Alternatively, one or more strain gauges may be arranged transversely (not parallel) to the axes shown. In this way the strain gauges can be arranged to measure twisting of the strut.

During use, each of the measuring devices provides continuous or discrete measurement results on the load experienced by the device. The measurement results may be sent to a control unit wirelessly or by wired transmission.

In 302, one or more operation parameters, such as steering angles or propulsion power of the propulsion units are varied to test a set of operation parameters. The set of testable parameters may be a predefined set of parameter values, such as a set of steering angles, or may be selectable by the user, for instance.

In 304, the observed quantity such as strain or displacement may be converted to load and/or thrust and/or energy consumption estimate. There may be provided a mathematical model, which calculates the load and/or other outcome values by taking into account several factors. For example, the position of a strain gauge, whether in the top or lower part of the strut has great significance to the load experienced by the vessel hull. The relationship with various factors and measurements and the load may be determined beforehand and applied during operation of the vessel. The model may have a multiple parameters. There may be a plurality of strain gauges and displacement sensors in various positions on the propulsion unit and/or the vessel hull, and the load/thrust is determined by observing these plurality of sensors and calculating or reading from tables the load as a resultant of the measurements of the multiple sensors. The mathematical model can also be created by using finite element method.

The output of the load parameter measuring devices may be, in some embodiments, directly applied in determining operation parameter values for the propulsion unit. The load may thus have a direct or indirect relationship to the thrust provided by the propulsion unit to the propagation direction of the vessel.

By way of an example, there may be wind or water current, whereby the azimuthing propulsion units may be needed to be operated in 5 degree angle to the longitudinal direction of the ship. If it is assumed that there are provided load parameter measurement devices both in end and side faces of the propulsion units, the thrust can be calculated by simple arithmetics taking into account the resultant of loads measured by both load parameter measurement devices to the propagation direction of the vessel.

The evaluation may be performed for each propulsion unit and for several strain gauges per propulsion unit. It is noted that if there are two propulsion units, both propulsion units may be adjusted concurrently. It may be carried out such that the toe angle remains constant or by allowing the toe angle to change too.

In 306, the operation parameter of the propulsion unit may be adjusted such that a predetermined criterion is fulfilled. The operation parameter may be a steering angle of the propulsion unit, for example. By way of an example, the criterion may be such that the maximal thrust provided by the propulsion units in combination is maximized.

Preferably, the measuring of the load, and adjusting the operation parameter(s) are performed continuously all the time to ensure that desired objectives, such as maximizing the thrust, are achieved all the time.

Alternatively, there may be provided a sophisticated calculation model, where at least one load parameter is applied. The load parameter refers here to a parameter that is illustrative of a load affected by the propulsion unit on the vessel hull. The calculation model may have a plurality of parameters, and the optimum could be either a maximum or a minimum of the calculation model. The model may thus have one parameter that describes the sideways bending of the propulsion unit. If the model is to be maximized, a low bending value would give high function value. Another parameter may be the amount of thrust force. A higher thrust, that is high vertical strain of the pod, would give a high parameter value in the model. Another parameter might be fuel consumption, where an inverse relationship would be applied such that low fuel consumption would give high parameter value in a function to be maximized.

The embodiments provide the important advantage that at all cruising circumstances of the vessel such operating parameters values can be found that provide the maximal thrust and the lowest energy consumption respectively.

It will be obvious to a person skilled in the art that, as the technology advances, the inventive concept can be implemented in various ways. The invention and its embodiments are not limited to the examples described above but may vary within the scope of the claims.

## Claims

1. A control arrangement for controlling a vessel, comprising at least two propulsion units (200A, 200B), and each of the propulsion units comprises at least one load parameter measuring device for measuring a parameter usable in determining a load caused by the propulsion unit to vessel (210), and a control system (220) for controlling the at least two propulsion units, the control system being arranged to determine a load effected by the propulsion units on the vessel (210), estimate, based on the determined load, a thrust to propagation direction of the vessel (210), and to set a value for an operation parameter of the propulsion units based on the determined load, **characterized in that** the propulsion units are azimuthing propulsion units, wherein the operation parameter is a toe angle between the propulsion units, the control system is arranged to attempt a plurality of operation parameter values for the propulsion units (200A, 200B), determine respective loads, and to set a value for the toe angle such that the thrust to the propagation direction of the vessel (210) is maximized.

2. A control arrangement according to claim 1, **characterized in that** the propulsion units comprise struts, and **in that** for determining the load affected by the propulsion units on the vessel (210), the control system comprises one or more strain gauges (204A-204D) arranged to the struts for measuring strain of the struts.

3. A control arrangement according to claim 1, **characterized in that** the propulsion units are azimuthing propulsion units (100) comprising a pod unit (110), and a strut (120) fixed to the pod unit (110), and a steering bearing (130) between the strut (120) and the vessel for providing rotation of the propulsion units (100).

4. A control arrangement according to any preceding claim, **characterized in that** the control system comprises an optical measuring device arranged to the propulsion units (200A, 200B) for monitoring bending and/or displacement of the strut and/or the pod unit.

5. A control arrangement according to any preceding claim, **characterized in that** the control system comprises a displacement sensor arranged to the vessel hull for measuring inclination of the propulsion units (100).

6. A control arrangement according to any preceding claim, **characterized in that** the operating parameter is a steering angle of the azimuthing propulsion units (200A, 200B).

7. A control arrangement according to any preceding claim, **characterized in that** the operating parameter is a propulsion efficiency of the azimuthing propulsion units (200A, 200B).

8. A control arrangement according to any preceding claim, **characterized in that** the control system is arranged to continuously determine the load of the propulsion units (200A, 200B) on the vessel (210) and to continuously adjust the one or more operating parameters of the propulsion units based on the determined load.

9. A vessel comprising a control arrangement according to any preceding claim.

## Patentansprüche

1. Steueranordnung zum Steuern eines Schiffes, umfassend mindestens zwei Antriebseinheiten (200A, 200B), und wobei jede der Antriebseinheiten zumindest eine Lastparametermessvorrichtung zum Messen eines Parameters umfasst, der verwendbar ist beim Bestimmen einer Last, die durch die Antriebseinheit am Schiff (210) verursacht wird, und ein Steuersystem (220) zum Steuern der mindestens zwei Antriebseinheiten, wobei das Steuersystem angeordnet ist zum Bestimmen einer Last, die durch die Antriebseinheiten auf das Schiff (210) gewirkt wird, zum Schätzen, basierend auf der bestimmten Last, eines Schubs in Ausbreitungsrichtung des Schiffes (210), und zum Einstellen eines Werts für einen Betriebsparameter der Antriebseinheiten basierend auf der bestimmten Last,
**dadurch gekennzeichnet, dass** die Antriebseinheiten Azimut-Antriebseinheiten sind, wobei der Betriebsparameter ein Spurwinkel zwischen den Antriebseinheiten ist, wobei das Steuersystem dazu angeordnet ist, mehrere Betriebsparameterwerte für die Antriebseinheiten (200A, 200B) zu versuchen, entsprechende Lasten zu bestimmen und einen Wert für den Spurwinkel einzustellen, sodass der Schub in Ausbreitungsrichtung des Schiffes (210) maximiert ist.

2. Steueranordnung nach Anspruch 1,
**dadurch gekennzeichnet, dass** die Antriebseinheiten Streben umfassen, und dadurch, dass zum Bestimmen der Last, die durch die Antriebseinheiten auf das Schiff (210) gewirkt wird, die Steuereinheit einen oder mehrere Dehnungsmesser (204A-204D) umfasst, die an den Streben angeordnet sind, um die Dehnung der Streben zu messen.

3. Steueranordnung nach Anspruch 1,
**dadurch gekennzeichnet, dass** die Antriebseinheiten Azimut-Antriebseinheiten (100) sind, umfassend eine Pod-Einheit (110) und eine Strebe (120), befestigt an der Pod-Einheit (110) und ein Lenkungslager (130) zwischen der Strebe (120) und dem Schiff zum Bereitstellen von Drehung der Antriebseinheiten (100).

4. Steueranordnung nach einem der vorhergehenden Ansprüche,
**dadurch gekennzeichnet, dass** das Steuersystem eine optische Messvorrichtung, die an den Antriebseinheiten (200A, 200B) angeordnet ist, zum Überwachen auf Biegung und/oder Versetzung der Strebe und/oder der Pod-Einheit umfasst.

5. Steueranordnung nach einem der vorhergehenden Ansprüche,
**dadurch gekennzeichnet, dass** das Steuersystem einen Versetzungssensor, der am Schiffsrumpf angeordnet ist, zum Messen der Neigung der Antriebseinheiten (100) umfasst.

6. Steueranordnung nach einem der vorhergehenden Ansprüche,
**dadurch gekennzeichnet, dass** der Betriebsparameter ein Lenkwinkel der Azimut-Antriebseinheiten (200A, 200B) ist.

7. Steueranordnung nach einem der vorhergehenden Ansprüche,
**dadurch gekennzeichnet, dass** der Betriebsparameter eine Antriebseffizienz der Azimut-Antriebseinheiten (200A, 200B) ist.

8. Steueranordnung nach einem der vorhergehenden Ansprüche,
**dadurch gekennzeichnet, dass** das Steuersystem angeordnet ist zum kontinuierlichen Bestimmen der Last der Antriebseinheiten (200A, 200B) auf das Schiff (210) und zum kontinuierlichen Einstellen des einen oder der mehreren Betriebsparameter der Antriebseinheiten basierend auf der bestimmten Last.

9. Schiff, umfassend eine Steueranordnung nach einem der vorhergehenden Ansprüche.

## Revendications

1. Agencement de commande pour commander un navire, comprenant au moins deux unités de propulsion (200A, 200B), et chacune des unités de propulsion comprend au moins un dispositif de mesure de paramètre de charge pour mesurer un paramètre utilisable dans la détermination d'une charge causée par l'unité de propulsion sur le navire (210), et un système de commande (220) pour commander les au moins deux unités de propulsion, le système de commande étant agencé pour déterminer une charge effectuée par les unités de propulsion sur le navire (210), estimer, sur la base de la charge déterminée, une poussée sur une direction de propagation du navire (210), et pour régler une valeur pour un paramètre de fonctionnement des unités de propulsion sur la base de la charge déterminée, **caractérisé en ce que** les unités de propulsion sont des unités de propulsion orientables en azimut, dans lequel le paramètre de fonctionnement est un angle de pincement entre les unités de propulsion, le système de commande est agencé pour essayer une pluralité de valeurs de paramètre de fonctionnement pour les unités de propulsion (200A, 200B), déterminer des charges respectives, et pour régler une valeur pour l'angle de pincement de telle sorte que la poussée sur la direction de propagation du navire (210) soit maximisée.

2. Agencement de commande selon la revendication 1, **caractérisé en ce que** les unités de propulsion comprennent des entretoises, et **en ce que** pour déterminer la charge effectuée par les unités de propulsion sur le navire (210), le système de commande comprend un ou plusieurs extensomètres (204A-204D) agencés sur les entretoises pour mesurer la contrainte sur les entretoises.

3. Agencement de commande selon la revendication 1, **caractérisé en ce que** les unités de propulsion sont des unités de propulsion orientables en azimut (100) comprenant une unité nacelle (110), et une entretoise (120) fixée à l'unité nacelle (110), et un palier de gouverne (130) entre l'entretoise (120) et le navire pour fournir une rotation des unités de propulsion (100).

4. Agencement de commande selon une quelconque revendication précédente, **caractérisé en ce que** le système de commande comprend un dispositif de mesure optique agencé sur les unités de propulsion (200A, 200B) pour surveiller une flexion et/ou un déplacement de l'entretoise et/ou de l'unité nacelle.

5. Agencement de commande selon une quelconque revendication précédente, **caractérisé en ce que** le système de commande comprend un capteur de déplacement agencé sur la coque de navire pour mesurer une inclinaison des unités de propulsion (100).

6. Agencement de commande selon une quelconque revendication précédente, **caractérisé en ce que** le paramètre de fonctionnement est un angle de gouverne des unités de propulsion orientables en azimut (200A, 200B).

7. Agencement de commande selon une quelconque revendication précédente, **caractérisé en ce que** le paramètre de fonctionnement est un rendement de propulsion des unités de propulsion orientables en azimut (200A, 200B).

8. Agencement de commande selon une quelconque revendication précédente, **caractérisé en ce que** le système de commande est agencé pour déterminer en continu la charge des unités de propulsion (200A, 200B) sur le navire (210) et pour ajuster en continu les un ou plusieurs paramètres de fonctionnement des unités de propulsion sur la base de la charge déterminée.

9. Navire, comprenant un agencement de commande selon une quelconque revendication précédente.
